(19) Europäisches Patentamt / European Patent Office / Office européen des brevets

(11) **EP 2 094 531 B1**

(12) **FASCICULE DE BREVET EUROPEEN**

(45) Date de publication et mention
de la délivrance du brevet:
**09.06.2010 Bulletin 2010/23**

(21) Numéro de dépôt: **07858523.9**

(22) Date de dépôt: **08.10.2007**

(51) Int Cl.:
*B60R 1/00* $^{(2006.01)}$      *B60K 35/00* $^{(2006.01)}$
*B60Q 1/00* $^{(2006.01)}$      *G06T 3/00* $^{(2006.01)}$
*G06T 5/00* $^{(2006.01)}$      *H04N 7/18* $^{(2006.01)}$

(86) Numéro de dépôt international:
**PCT/FR2007/052092**

(87) Numéro de publication internationale:
**WO 2008/050022 (02.05.2008 Gazette 2008/18)**

(54) **DISPOSITIF RETROVISEUR ELECTRONIQUE**

ELEKTRONISCHE RÜCKANSICHTSVORRICHTUNG

ELECTRONIC REAR-VIEW DEVICE

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **23.10.2006 FR 0654436**

(43) Date de publication de la demande:
**02.09.2009 Bulletin 2009/36**

(73) Titulaire: **Renault SAS
92100 Boulogne Billancourt (FR)**

(72) Inventeurs:
- **CORNOU, Sebastien
  91940 Les Ulis (FR)**
- **AYMA, Vincent
  75015 Paris (FR)**

(56) Documents cités:
**EP-A- 1 211 132        EP-A- 1 504 960
EP-A2- 1 298 000        DE-A1- 10 246 652**

Printed by Jouve, 75001 PARIS (FR)

## EP 2 094 531 B1

**Description**

L'invention a pour objet un dispositif rétroviseur électronique, en particulier pour un véhicule automobile.

Les dispositifs rétroviseurs utilisés sur les véhicules automobiles sont constitués, habituellement, par un ou plusieurs miroirs réfléchissant chacun, vers le conducteur, l'image d'une partie arrière de l'environnement du véhicule. Pour élargir le champ de vision, on utilise souvent trois miroirs orientables disposés, respectivement, dans l'axe du véhicule et sur chaque côté de celui-ci. Par ailleurs, les miroirs présentent habituellement une face légèrement convexe, ce qui élargit le champ de vision mais détermine une certaine distorsion de l'image qui perturbe l'appréciation des distances.

Depuis un certain temps, on a proposé d'utiliser des dispositifs à caméra qui peuvent s'ajouter aux miroirs habituels ou, même, les remplacer, la caméra étant dirigée vers une zone de l'environnement pour en former une image sur un écran vidéo.

Le document US-A 5 978 017, par exemple, propose de placer sur le véhicule plusieurs caméras permettant d'enregistrer ce qui s'est passé à l'intérieur ou autour du véhicule en cas d'accident ou de vol. Un tel système n'est donc pas prévu pour remplacer les rétroviseurs à miroir.

Le document US 2002/00 71 676A propose de placer sur un rétroviseur classique une caméra destinée à observer la zone aveugle, sur le côté avant du véhicule, et placée, par conséquent, sur la face avant du rétroviseur.

Le document FR-A 2 673 499 décrit un dispositif de rétrovision comportant une ou plusieurs caméras disposées à l'arrière du véhicule, chaque caméra pouvant pivoter sur son support autour d'un axe vertical de façon à permettre au conducteur, en fonction de la manoeuvre qu'il effectue, de régler la vue arrière qui s'affiche sur son écran vidéo. L'orientation de la caméra peut être commandée, par exemple, pair l'enclenchement de la marche arrière et un clignotant ou le braquage des roues afin d'orienter la caméra dans la direction souhaitée, la caméra revenant ensuite, automatiquement, à sa position de référence. Un tel dispositif est donc prévu, essentiellement, pour les manoeuvres de parking).

Un dispositif selon le préambule de la revendication 1 est connu du document EP-A-1 211 132.

Ces dispositifs connus sont assez complexes, en particulier lorsqu'ils nécessitent un montage pivotant et une possibilité d'orientation de la caméra et ne sont pas prévus, habituellement, pour remplacer les rétroviseurs classiques mais, plutôt, pour en améliorer les performances en donnant une vision sur des angles morts.

L'invention a pour objet, au contraire, un dispositif rétroviseur électronique de structure très simple, qui peut se substituer aux rétroviseurs classiques et, en outre, permet au conducteur de bénéficier, à chaque instant, d'une vision optimale de son environnement en fonction de la manoeuvre qu'il souhaite effectuer.

L'invention concerne donc un dispositif rétroviseur électronique comportant au moins une caméra ayant un champ de vision couvrant une zone déterminée de l'environnement du véhicule et centrée sur un axe optique, et un système électronique d'affichage, sur un écran vidéo, d'une image de ladite zone de l'environnement enregistrée par la caméra.

Conformément à l'invention, la caméra est fixe, avec une orientation déterminée de son axe optique et le système électronique d'affichage comporte des moyens de traitement d'image susceptibles, à partir d'une image globale enregistrée par la caméra, d'afficher sur l'écran vidéo une image simulée adaptée aux conditions de conduite, à un instant déterminé, ladite image simulée étant centrée sur un axe optique virtuel dont l'orientation peut être réglée par rapport à celle de l'axe optique de la caméra. En outre, le système d'affichage peut comporter un moyen de réglage du grandissement de l'image simulée par rapport à l'image brute.

Dans un mode de réalisation préférentiel, le système d'affichage comporte une interface homme/machine fournissant des instructions de formation de l'image simulée sur l'écran vidéo, un bloc de calcul des conditions de vue arrière tenant compte d'un ensemble d'informations d'entrée issues du véhicule et de l'interface homme/machine, et un bloc de traitement d'image déterminant au moins l'orientation et le champ de vision de l'image simulée affichée sur l'écran vidéo, à partir des informations fournies par le bloc de calcul.

Le système d'affichage comporte un bloc de mémorisation des préférences de l'utilisateur dans lequel sont mémorisées, pour certaines situations de conduite, un ensemble d'informations relatives au mode de vue préféré pour chaque situation et comportant l'orientation, le grandissement et le champ de vision de l'image simulée, lesdites informations mémorisées étant transmises à un bloc de calcul des conditions de vue pour l'affichage, sur l'écran vidéo, d'une image simulée correspondant au souhait de l'utilisateur pour la situation de conduite considérée.

Selon une autre caractéristique préférentielle, le dispositif comporte des moyens de correction des défauts géométriques de l'image brute pour l'obtention d'une image quasi-parfaite à partir de laquelle le système d'affichage forme l'image simulée. En particulier, la correction des défauts géométriques de l'image brute peut être réalisée par le bloc de traitement d'image en tenant compte d'un ensemble de paramètres internes de la caméra comportant au moins la focale et le ratio hauteur/largeur des pixels, lesdits paramètres internes étant déterminés par un calibrage de la caméra permettant de définir un modèle de distorsion.

Selon une autre caractéristique particulièrement avantageuse, l'image brute se formant dans un premier plan d'image réelle par convergence des rayons lumineux vers un foyer de la caméra, le système d'affichage forme l'image

2

simulée dans un second plan d'image qui se déduit du premier plan d'image réelle par une rotation autour du foyer. A cet effet, le système d'affichage peut faire correspondre à chaque, pixel de l'image brute, un pixel de l'image simulée, par une transformation mathématique d'homographie.

Dans un mode de réalisation préférentiel, pour réaliser une rotation du plan de l'image finale simulée, d'un angle $\alpha$ autour d'un axe horizontal et d'un angle $\beta$ autour d'un axe vertical, le système d'affichage détermine une transformation dans laquelle chaque pixel de l'image brute est lié à un pixel de l'image finale simulée par le système d'équations :

$$(1) \quad \begin{pmatrix} i_0 \\ j_0 \\ 1 \end{pmatrix} = \begin{bmatrix} \text{focale} * \dfrac{i'}{s} + u_0 \\ \text{focale} * \dfrac{j'}{s} + v_0 \end{bmatrix}$$

$$(2) \quad \begin{bmatrix} i' \\ j' \\ s \end{bmatrix} = \begin{bmatrix} \cos(\beta) & 0 & -\sin(\beta) \\ 0 & 1 & 0 \\ \sin(\beta) & 0 & \cos(\beta) \end{bmatrix} \begin{bmatrix} 1 & 0 & 0 \\ 0 & \cos(\alpha) & -\sin(\alpha) \\ 0 & \sin(\alpha) & \cos(\alpha) \end{bmatrix} \begin{bmatrix} i - u_0 \\ j - v_0 \\ 1 \end{bmatrix}$$

dans lesquelles :

- i' et j' sont des variables intermédiaires données par la rotation (2) :
- $(i_1, j_1)$ sont les coordonnées d'un pixel de l'image finale et $(i_0, j_0)$ les coordonnées du pixel correspondant de l'image brute dans un repère image ayant deux axes orthogonaux, respectivement horizontal et vertical passant par une origine placée sur un coin supérieur de l'image;
- $(u_0, v_0)$ sont les coordonnées du centre de l'image finale dans le repère image;
- $\alpha$, $\beta$ sont les angles de rotation souhaités du plan de l'image finale autour de deux axes, respectivement horizontal et vertical passant par le foyer;
- s est un facteur d'échelle.

D'autres caractéristiques avantageuses de l'invention apparaîtront dans la description suivante d'un mode de réalisation particulier, donné à titre d'exemple non limitatif et représenté sur les dessins annexés.

La figure 1 est une vue schématique de dessus d'un véhicule automobile muni d'un dispositif selon l'invention.
La figure 2 est un schéma en perspective indiquant la formation d'une image simulée à partir d'une image brute.
La figure 3 est un schéma d'ensemble du dispositif.
La figure 4 montre un exemple de correction de l'image simulée à partir d'une image brute.
La figure 5 donne plusieurs exemples de rotation du plan de l'image simulée par rapport au plan de l'image brute.
La figure 6 montre comment le champ de vision de la caméra virtuelle peut varier par réglage du grandissement.
Les figures 7 et 8 donnent deux exemples d'utilisation du dispositif, respectivement en situation routière et en site urbain.

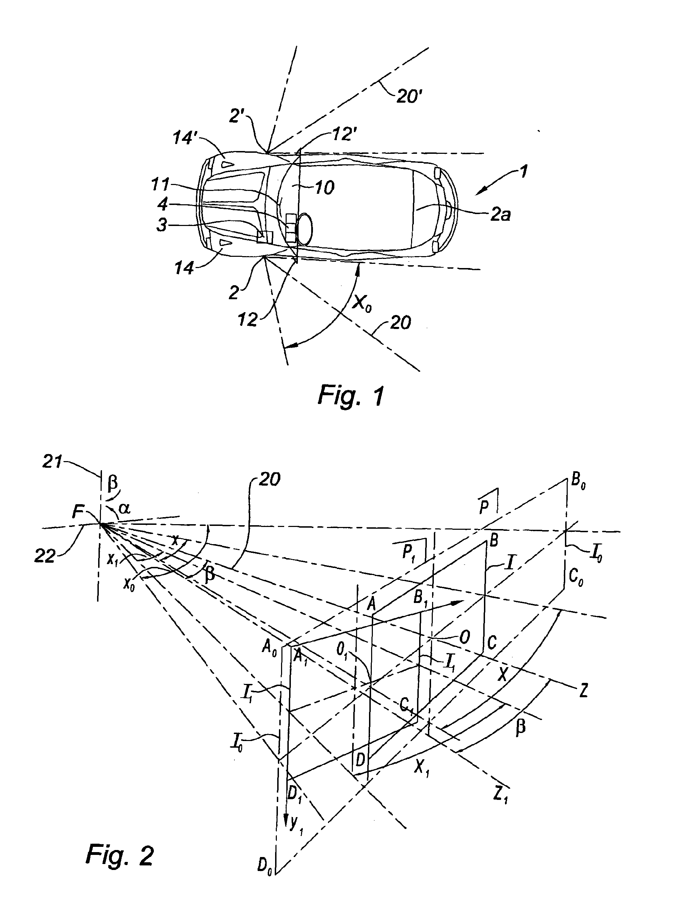

Sur la figure 1 on a représenté schématiquement, en vue de dessus, un véhicule automobile 1 ayant un tableau de bord 10. Pour donner au conducteur une vision de son environnement vers l'arrière, le véhicule peut être muni, comme habituellement, d'un rétroviseur central 11 et de deux rétroviseurs latéraux 12, 12' mais, en outre, il est équipé, dans l'exemple représenté, de deux caméras 2, 2' placées, respectivement, sur chaque côté du véhicule et ayant un axe optique 20, 20' dirigé vers l'arrière. Dans l'exemple représenté, ces caméras 2, 2' sont placées en avant du conducteur, sur chacune des deux ailes 14, 14' du véhicule mais elles pourraient aussi être placées, par exemple dans les feux arrières. Le cas échéant, une troisième caméra 2a peut aussi être placée à l'arrière du véhicule, dans l'axe de celui-ci.
Comme indiqué plus haut, une disposition de ce genre a déjà été décrite, par exemple dans le brevet FR-A 2 673 499 mais, dans ce cas, chaque caméra était montée pivotante sur un support afin d'être orientée pour faire varier le champ de vision de la caméra.
Dans l'invention, au contraire, les caméras 2, 2' sont fixes et associées à un système électronique d'affichage 3 qui permet de former une image de l'environnement enregistrée par la caméra sur un écran vidéo 4 placé à la vue du conducteur sans gêne pour celui-ci, par exemple sur le tableau de bord 10.

Selon l'invention, le système d'affichage 3 qui va être décrit maintenant permet d'afficher sur l'écran vidéo 4 une image simulée adaptée, à chaque instant, aux conditions de conduite, de la façon souhaitée par le conducteur.

De la façon représentée schématiquement sur la figure 2, le système électronique d'affichage forme, sur l'écran vidéo 4, une image simulée centrée sur un axe optique virtuel dont l'orientation peut être réglée électroniquement par rapport à celle de l'axe optique réel de l'image brute enregistrée.

Sur la figure 2, on a représenté schématiquement, en perspective, le foyer F de la caméra et l'axe optique 20 de celle-ci, qui est orienté vers l'arrière suivant une direction fixe Fz, la caméra 2 n'étant pas orientable.

D'une façon générale, l'image est formée dans un plan d'image P orthogonal à l'axe optique 20, chaque point ou pixel de cette image étant sur un rayon lumineux passant par le foyer F de la caméra.

Pour la mise en oeuvre de l'invention, on utilise une caméra 2 s'ouvrant sur un très large secteur angulaire $X_0$, éventuellement obtus, afin de fournir au système une image globale de l'environnement pouvant couvrir tout le secteur arrière, sur le côté correspondant du véhicule, en remontant, même, légèrement vers l'avant afin de couvrir l'angle mort habituel correspondant aux montants du pare-brise.

La caméra 2 est donc capable de former, dans le plan P, une image globale $I_0$ centrée en O sur la direction Fz correspondant à l'axe optique 20 et s'étendant sur tout le secteur angulaire $X_0$ vu par la caméra.

Cependant, cette image globale, représentée sur la figure 2 par le rectangle Ao, Bo, Co, Do, ne serait pas facilement utilisable par le conducteur, en raison de sa trop grande largeur et c'est pourquoi l'image brute I affichée sur l'écran vidéo et représentée par le rectangle A, B, C, D, présente un rapport habituel entre la hauteur et la largeur et s'étend sur un secteur angulaire X centré également sur la direction Fz mais plus réduit que le large secteur $X_0$ correspondant à l'ensemble du champ de vision de la caméra.

D'autre part, pour choisir l'angle de vision le mieux adapté aux conditions de conduite, l'invention prévoit, par des moyens purement électroniques, de faire tourner autour du foyer F le plan dans lequel se forme l'image affichée sur l'écran vidéo en bénéficiant de l'ensemble du champ visuel de la caméra. L'image simulée $I_1$ affichée sur l'écran vidéo, est donc centrée en $O_1$ sur un axe optique virtuel $Fz_1$ incliné d'un angle $\beta$ par rapport à l'axe optique réel Fz et couvre donc un secteur angulaire $X_1$ décalé latéralement par rapport au secteur X de l'image brute I, centré sur l'axe optique Fz de la caméra, tout en restant à l'intérieur du secteur angulaire global $X_0$ vu par la caméra 2.

Cependant, le champ visuel de la caméra 2 est également plus large en hauteur et permet de voir, en réalité, des zones de l'environnement situées au-dessus et en dessous de l'image brute I formée sur l'écran vidéo. Le système électronique d'affichage peut donc être prévu pour décaler l'image simulée, non seulement latéralement mais également vers le haut ou vers le bas, par exemple pour voir un trottoir dans une manoeuvre de rangement du véhicule. Il sera donc possible de faire tourner l'axe optique virtuel $Fz_1$, par rapport à l'axe optique réel Fz, non seulement d'un angle $\beta$ autour de l'axe vertical 21 passant par le foyer F, mais également d'un angle $\alpha$ autour de l'axe horizontal 22 perpendiculaire à l'axe optique 20 de la caméra.

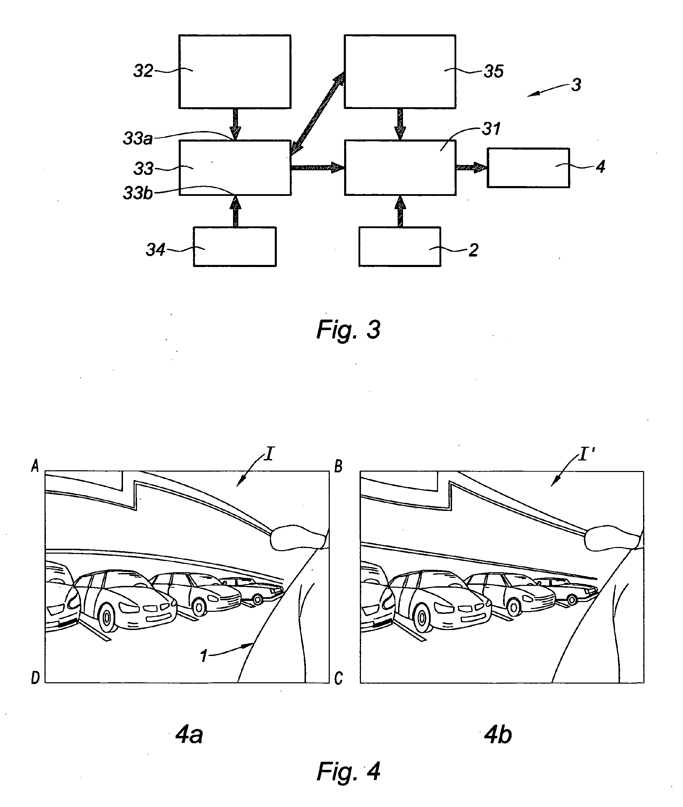

Selon l'invention, ces rotations du plan de l'image virtuelle sont réalisées de façon purement électronique par un système d'affichage 3 du type représenté schématiquement sur la figure 3 qui montre, dans un mode de réalisation préférentiel, les différents éléments du système et leurs interactions.

Comme indiqué plus haut, l'image globale $I_0$ de l'environnement du véhicule est fournie au système d'affichage 3 par une ou plusieurs caméras 2 qui peuvent être placées à l'arrière du véhicule ou sur les côtés de celui-ci. On utilise soit une seule caméra placée à l'arrière du véhicule 1 et couvrant un secteur angulaire très large pouvant dépasser 180˚, soit, de préférence, plusieurs caméras 2, 2', 2a fournissant ensemble une image globale couvrant le champ de vision souhaité.

Les informations relatives à l'image globale enregistrée par la caméra sont fournies à un bloc de traitement d'image 31 qui va réaliser plusieurs transformations successives pour afficher sur l'écran vidéo 4 une image correspondant aux souhaits du conducteur.

Tout d'abord, comme indiqué plus haut, le bloc de traitement d'image 31 limite les dimensions de celle-ci en hauteur et en largeur de façon à former une image brute I utilisable par le conducteur et constituée, schématiquement, d'un rectangle A, B, C, D centré en O sur l'axe optique Fz de la caméra et situé dans un plan d'image $P_0$ orthogonal à celui-ci.

Cette image brute est relativement distordue de la façon représentée, à titre d'exemple, sur la figure 4a qui a été prise par une caméra placée sur le côté droit du capot moteur du véhicule 1.

Dans une première étape, cette image brute I va être transformée en une image projective quasi-parfaite I' pour laquelle la distorsion est corrigée, de la façon représentée sur la figure 4b. Pour cela, la caméra équipée de ses optiques a été calibrée afin de déterminer ses paramètres internes tels que la focale et le ratio hauteur/largeur des pixels et d'en déduire un modèle de distorsion. Une fois le calibrage réalisé, les informations obtenues sont utilisées dans le bloc de traitement d'image 31 pour corriger les défauts géométriques de l'image brute I et construire une image corrigée quasi-parfaite 1'.

C'est à partir de cette image corrigée que, dans une deuxième étape, le bloc de traitement d'image 31 va construire une image virtuelle $I_1$ en réalisant, de la façon décrite plus loin, une rotation du plan image $P_1$ d'un angle $\beta$ autour de l'axe vertical 21 passant par le foyer F et, éventuellement, d'un angle $\alpha$ autour de l'axe horizontal 22. Ces transformations sont réalisées d'une part à partir des instructions qui peuvent être fournies à chaque instant par le conducteur et, d'autre part, à partir d'instructions calculées, par exemple, en fonction des données du véhicule et des conditions de conduite.

Le système d'affichage 3 comporte donc, tout d'abord, une interface homme/machine 32 de type classique qui permet au conducteur, comme sur un rétroviseur commandé manuellement, de choisir son angle de vision, la commande électronique permettant, en outre, de choisir également le grandissement de l'image par un effet de zoom.

Les instructions données par le conducteur à l'interface 32 sont envoyées au bloc de traitement d'image 31 par l'intermédiaire d'un bloc 33 de calcul des conditions de vue arrière qui reçoit, à une entrée 33a, les ordres donnés par l'interface 32 et, à une entrée 33b, toutes les informations nécessaires relatives au véhicule et fournies par un élément de données 34 telles que la vitesse, l'angle de rotation du volant vers la droite ou vers la gauche et le rapport enclenché dans la boîte de vitesses afin de tenir compte, à chaque instant, des conditions de conduite, par exemple une conduite sur route ou une marche arrière pour une manoeuvre de rangement.

Cependant, selon une autre caractéristique particulièrement avantageuse de l'invention, le système d'affichage 3 peut également comporter un bloc 35 de mémorisation des préférences de l'utilisateur, dans lequel ce dernier a mis en mémoire à l'avance les modes de vue qu'il préfère en fonction des situations de conduite.

A. cet effet, le bloc de mémorisation 35 reçoit et mémorise, pour chaque condition de conduite particulière, les informations établies par le bloc de calcul 33, en particulier les angles de rotation $\alpha$ et $\beta$ et le facteur de zoom souhaité, en fonction des paramètres du véhicule fournis par l'élément de données 34 et des instructions fournies, dans chaque cas, par le conducteur, au moyen de l'interface homme/machine 32.

Ces informations sont sauvegardées par le bloc de mémorisation 35 et renvoyées par celui-ci sur le bloc de calcul 33 lorsque, à un instant déterminé, les conditions de conduite actuelles perçues et transmises par l'élément de données 34 correspondent à des conditions de conduite déjà mémorisées.

Ainsi, le bloc de calcul 33 affiche sur le bloc de traitement d'image 31 les paramètres a et et le facteur de zoom a priori les plus souhaitables, compte tenu de la situation actuelle du véhicule et des souhaits formulés à l'avance par l'utilisateur.

A partir de l'image globale la enregistrée par la caméra et corrigée des distorsions, le bloc de traitement d'image 31 forme donc sur l'écran vidéo 4 une image $I_1$ placée dans un plan d'image virtuel $P_1$ orthogonal à un axe optique virtuel $Fz_i$ ayant tourné des angles $\alpha$ et $\beta$ par rapport à l'axe optique réel Fz de la caméra, cette image virtuelle $I_1$ correspondant, à chaque instant, aux souhaits de l'utilisateur pour la situation de conduite actuelle.

En résumé, le bloc 33 de calcul des conditions de vue arrière reçoit donc, sur ses entrées trois types d'informations :

- les ordres qui peuvent être donnés, à chaque instant, par l'utilisateur, en particulier l'orientation de l'axe optique virtuel $F_{z_1}$ et l'effet de zoom souhaités, ces informations pouvant être fournies par l'interface homme/machine 32 munie d'un bouton de réglage;
- les informations relatives au véhicule, fournies par l'élément 34, qui permettent de tenir compte des conditions de conduite observée à chaque instant ;
- les informations fournies par le bloc de mémorisation 35 dans lequel l'utilisateur a indiqué à l'avance les modes de vision qu'il préfère selon les conditions de conduite.

A partir de toutes les informations fournies en entrée, le bloc 33 de calcul des conditions de vue arrière détermine les angles de rotation $\beta$ et $\alpha$ ainsi que le facteur de zoom à appliquer à l'image selon les conditions de conduite.

En particulier, le facteur de zoom peut être adapté en fonction de la vitesse du véhicule de façon à faire apparaître les détails nécessaires tout en conservant le champ de vision vers l'arrière le plus adéquat.

Pour former l'image virtuelle souhaitée $I_1$ dans le plan d'image $P_1$, le bloc de traitement d'image 31 peut appliquer des modèles sténopés utilisant des équations du type utilisé couramment en géométrie projective, dans les techniques de vision par ordinateur.

Ces techniques sont exposées, par exemple, dans l'ouvrage : Multiple view geometry in Computer vision de Mortley, Rivet Zisselman - Cambridge University Press - ISBN 0521540518.

En particulier, pour une caméra parfaite modélisée, une rotation du plan d'image d'un angle horizontal $\beta$ ou vertical $\alpha$ peut être simulée en appliquant à l'image de départ, une transformation du type homographie.

Comme on le sait, l'image formée sur l'écran vidéo 4 est constituée de pixels accolés répartis en lignes superposées et correspondant chacun à un rayon lumineux passant par le foyer F et arrivant sur le plan d'image.

Chaque pixel peut être repéré par ses coordonnées dans un repère image centré, par exemple, en A ($A_1$) au niveau du coin supérieur gauche de l'image et ayant un axe horizontal Ax ($A_1x_1$) et un axe vertical Ay ($A_1y_1$).

D'une façon générale, la valeur de la luminance d'un pixel de l'image simulée $I_1$ ayant pour coordonnées i, j dans le repère image de celle-ci, correspond à la luminance d'un pixel de l'image brute I ayant pour coordonnées $i_0$, $j_0$.

Dans une transformation par homographie, avec rotation du plan d'image $P_1$ par rapport au plan P de l'image brute I, les techniques de simulation d'image en trois dimensions permettent, en fonction de la focale de la caméra et d'un facteur d'échelle s, de déterminer les coordonnées $(i_0, j_0)$ du pixel de l'image brute I correspondant à chaque pixel de l'image simulée $I_1$ ayant pour coordonnées (i, j), par la relation de transformation suivante:

$$\begin{pmatrix} i_0 \\ j_0 \\ 1 \end{pmatrix} = \begin{bmatrix} \text{focale} * \dfrac{i'}{s} + u_0 \\ \text{focale} * \dfrac{j'}{s} + v_0 \end{bmatrix}$$

dans laquelle i' et j' sont des variables intermédiaires données par la relation:

$$\begin{bmatrix} i' \\ j' \\ s \end{bmatrix} = \begin{bmatrix} \cos(\beta) & 0 & -\sin(\beta) \\ 0 & 1 & 0 \\ \sin(\beta) & 0 & \cos(\beta) \end{bmatrix} \begin{bmatrix} 1 & 0 & 0 \\ 0 & \cos(\alpha) & -\sin(\alpha) \\ 0 & \sin(\alpha) & \cos(\alpha) \end{bmatrix} \begin{bmatrix} i - u_0 \\ j - v_0 \\ 1 \end{bmatrix}$$

- $u_0$, $v_0$ étant les coordonnées du centre O de l'image brute I dans le repère image ;
- $\alpha$, $\beta$ étant les angles de rotation du plan $P_1$ de l'image simulée $I_1$, respectivement autour d'un axe horizontal 22 et d'un axe vertical 21.

Il est ainsi possible, en appliquant une telle transformation ou toute combinaison permettant, en outre, d'effectuer simultanément la correction des défauts géométriques de l'image brute, de réaliser un déplacement virtuel du plan de l'image $P_1$ pour obtenir, sur l'écran vidéo 4, une image $I_1$ simulant un déplacement mécanique de la caméra.

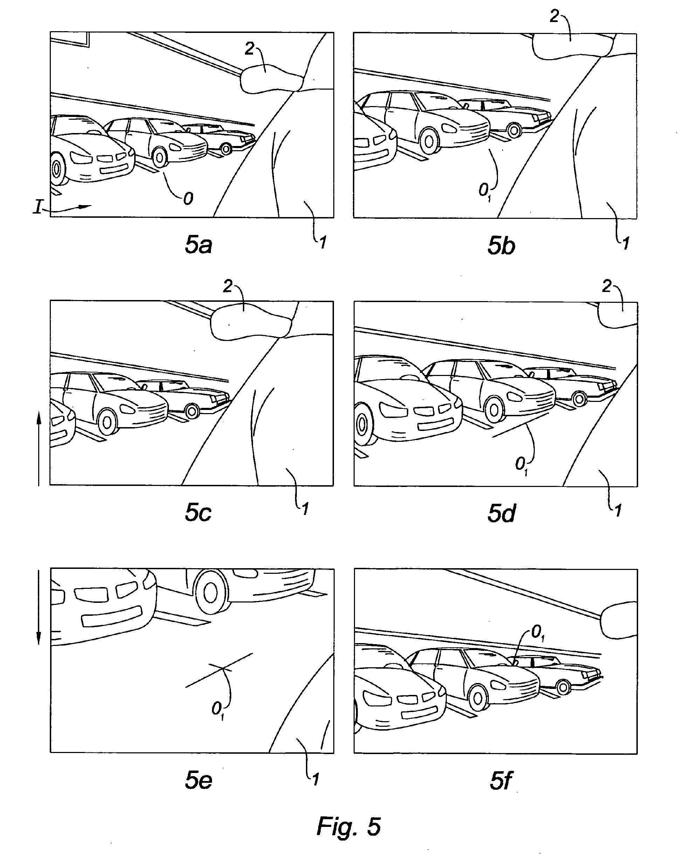

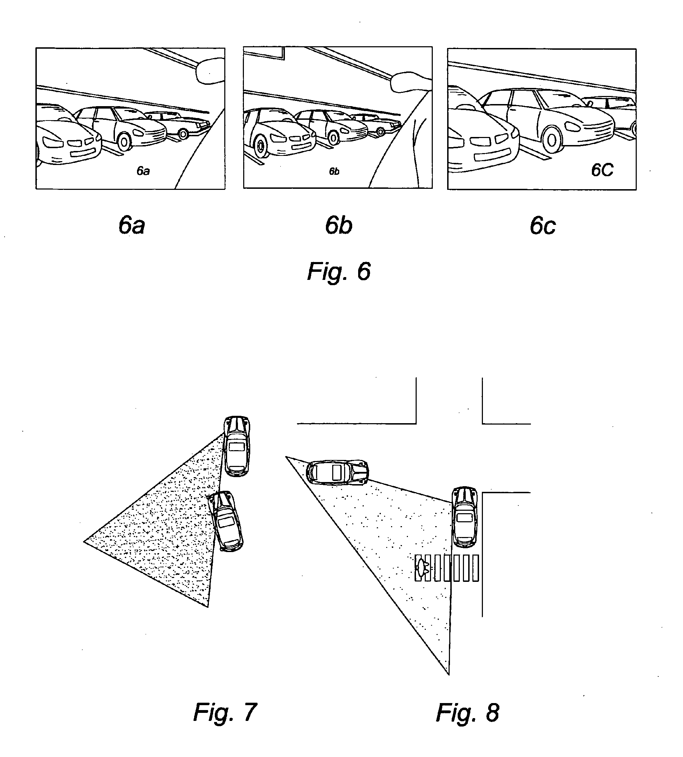

Les figures 5 et 6 montrent, à titre d'exemples, les images simulées que l'on peut former par une rotation virtuelle de la caméra.

La figure 5, par exemple, montre, en 5a, l'image brute I formée sur l'écran vidéo 4 à partir de l'image globale $I_0$ enregistrée par une caméra 2 placée sur le capot moteur d'un véhicule 1, en avant du rétroviseur classique 2, à l'intérieur d'un parking. Les figures 5b à 5f montrent les images virtuelles qui peuvent être formées sur l'écran vidéo 4 par rotation de l'axe optique virtuel $Fz_1$ vers le haut (Fig. 5c), vers le bas (Fig. 5e) ou vers la droite (Figures 5b, 5d, 5e).

La figure 6 montre, à partir de l'image brute corrigée 6a, comment une variation du facteur de zoom permet de modifier l'échelle des objets vus sur l'écran vidéo 4, en augmentant (Fig. 6b) ou en rétrécissant (Fig. 6c) le champ visuel de l'image virtuelle.

L'invention permet ainsi, à partir d'une image globale enregistrée par une ou plusieurs caméras fixes judicieusement placées, de faire varier l'orientation du plan dans lequel se forme l'image affichée sur l'écran vidéo, ainsi que le grandissement de celle-ci, en fonction des conditions de conduite et selon les souhaits de l'utilisateur qui peuvent être formulés à chaque instant ou bien ont été programmés à l'avance.

Dans le cas, par exemple, d'une circulation sur route à vitesse élevée, le rétroviseur doit donner une vision précise vers l'arrière, sur un angle assez limité, de la façon indiquée sur la figure 7, afin de repérer essentiellement les véhicules qui déboîtent et d'apprécier leur vitesse.

En revanche, dans le cas d'une circulation urbaine représenté sur la figure 8, le champ de vision peut être élargi, éventuellement jusque vers l'avant, afin de repérer l'ensemble de la scène, en évitant l'angle mort du pare-brise.

Par ailleurs, il est préférable de donner également sur l'écran une vision du côté droit au moyen du second rétroviseur.

A cet effet, l'écran vidéo 4 peut comporter deux parties, respectivement gauche et droite et éventuellement une partie centrale.

Mais l'invention ne se limite évidemment pas aux détails des modes de réalisation qui viennent d'être décrits à titre de simples exemples.

En particulier, d'autres modèles mathématiques pourraient être utilisés pour faire tourner le plan de l'image simulée.

D'autre part, il est possible d'utiliser plusieurs écrans vidéo associés chacun à une caméra, ou bien de former une seule image sur un écran large. D'ailleurs, le nombre et les emplacements des caméras peuvent également varier.

**Revendications**

1. Dispositif rétroviseur pour un véhicule (1), comportant au moins une caméra (2) ayant un champ de vision $(X_0)$ couvrant une zone déterminée de l'environnement du véhicule (1) et centré sur un axe optique (20, Fz), et un système électronique (3) d'affichage, sur un écran vidéo (4), d'une image (I) de ladite zone de l'environnement enregistrée par la caméra (2), la caméra (2) étant fixe avec une orientation déterminée de son axe optique (20, Fz) et le système électronique d'affichage (3) comportant des moyens (31) de traitement d'image susceptibles, à partir d'une image globale $(I_0)$ enregistrée par ladite caméra (2), d'afficher sur l'écran vidéo (4) une image simulée $(I_1)$ adaptée aux conditions de conduite à un instant déterminé, ladite image simulée $(I_1)$ étant centrée sur un axe optique virtuel $(Fz_1)$ dont l'orientation peut être réglée par rapport à celle de l'axe optique (20, Fz) de la caméra (2) **caractérisé par le fait que** le système d'affichage (3) comporte un bloc (35) de mémorisation des préférences de l'utilisateur dans lequel sont mémorisées, pour certaines situations de conduite, un ensemble d'informations relatives au mode de vue préféré de l'utilisateur pour chaque situation et comportant l'orientation, le grandissement et le champ de vision de l'image simulée $(I_1)$, lesdites informations mémorisées étant transmises à un bloc (33) de calcul des conditions de vue pour l'affichage, sur l'écran vidéo (4), d'une image simulée $(I_1)$ correspondant aux souhaits de l'utilisateur pour la situation de conduite considérée.

2. Dispositif rétroviseur selon la revendication 1, **caractérisé par le fait qu'**il comporte un moyen de réglage du grandissement de l'image simulée $(I_1)$ par rapport à l'image brute(I).

3. Dispositif rétroviseur selon l'une des revendications 1 et 2, **caractérisé par le fait que** le système d'affichage comporte une interface homme/machine (32) fournissant des instructions de formation de l'image simulée $(I_1)$ sur l'écran vidéo (4), un bloc (33) de calcul des conditions de vue arrière tenant compte d'un ensemble d'informations d'entrée issues du véhicule et de l'interface homme/machine (32), et un bloc de traitement d'image (31) déterminant au moins l'orientation et le champ de vision de l'image simulée $(I_1)$ affichée sur l'écran vidéo (4), à partir des informations fournies par le bloc de calcul (33).

4. Dispositif rétroviseur selon l'une des revendications précédentes, **caractérisé par le fait qu'**il comporte des moyens de correction des défauts géométriques de l'image (I) enregistrée par la caméra (2) pour l'obtention d'une image brute (I') quasi-parfaite à partir de laquelle le système d'affichage (3) forme l'image simulée $(I_1)$.

5. Dispositif rétroviseur selon la revendication 4, **caractérisé par le fait que** la correction des défauts géométriques de l'image enregistrée $(I_0)$ est réalisée par un bloc de traitement d'image (31) en tenant compte d'un ensemble de paramètres internes de la caméra (2) comportant au moins la focale et le ratio hauteur/largeur des pixels, lesdits paramètres internes étant déterminés par un calibrage de la caméra (2) permettant de définir un modèle de distorsion.

6. Dispositif rétroviseur selon l'une des revendications précédentes, **caractérisé par le fait que** l'image brute (I) se formant dans un premier plan $(P_0)$ d'image réelle par convergence des rayons lumineux vers un foyer (F) de la caméra (2), le système d'affichage (3) forme l'image simulée $(I_1)$ dans un second plan d'image $(P_1)$ qui se déduit du premier plan (P) d'image réelle par une rotation autour du foyer (F).

7. Dispositif rétroviseur selon la revendication 6, **caractérisé par le fait que** le système d'affichage (3) fait correspondre à chaque pixel de l'image brute (I), un pixel de l'image simulée $(I_1)$, par une transformation mathématique d'homographie.

8. Dispositif rétroviseur selon l'une des revendications 6 et 7, **caractérisé par le fait que**, pour réaliser une rotation du plan $(P_1)$ de l'image finale simulée $(I_1)$, d'un angle $\alpha$ autour d'un axe horizontal (22) et d'un angle $\beta$ autour d'un axe vertical (21), le système d'affichage (3) détermine une transformation dans laquelle chaque pixel de l'image brute (I) est lié à un pixel de l'image finale simulée $(I_1)$ par le système d'équations :

$$(1) \quad \begin{pmatrix} i_0 \\ j_0 \\ 1 \end{pmatrix} = \begin{bmatrix} \text{focale} * \dfrac{i'}{s} + u_0 \\ \text{focale} * \dfrac{j'}{s} + v_0 \end{bmatrix}$$

$$(2) \quad \begin{bmatrix} i' \\ j' \\ s \end{bmatrix} = \begin{bmatrix} \cos(\beta) & 0 & -\sin(\beta) \\ 0 & 1 & 0 \\ \sin(\beta) & 0 & \cos(\beta) \end{bmatrix} \begin{bmatrix} 1 & 0 & 0 \\ 0 & \cos(\alpha) & -\sin(\alpha) \\ 0 & \sin(\alpha) & \cos(\alpha) \end{bmatrix} \begin{bmatrix} i - u_0 \\ j - v_0 \\ 1 \end{bmatrix}$$

dans lequel :

- i' et j' sont des variables intermédiaires données par la relation;
- $(i_1, j_1)$ sont les coordonnées d'un pixel de l'image finale $(I_1)$ et $(i_0, j_0)$ les coordonnées du pixel correspondant de l'image brute (I) dans un repère image ayant deux axes orthogonaux, respectivement horizontal et vertical passant par une origine placée sur un coin supérieur de l'image;
- $(u_0, v_0)$ sont les coordonnées du centre $(O_1)$ de l'image finale dans le repère image ;
- $\alpha, \beta$ sont les angles de rotation souhaités du plan de l'image finale $(I_1)$ autour de deux axes, respectivement horizontal (22) et vertical (21) passant par le foyer (F) ;
- s est un facteur d'échelle.

## Claims

1. Rear-view device for a vehicle (1), comprising at least one camera (2) having a field of view $(X_0)$ covering a determined zone of the environment of the vehicle (1) and centred on an optical axis (20, Fz), and an electronic system (3) for displaying, on a video screen (4), an image (I) of the said zone of the environment as recorded by the camera (2), the camera (2) being fixed with a determined orientation of its optical axis (20, Fz) and the electronic display system (3) comprising image processing means (31) able, on the basis of a global image $(I_0)$ recorded by the said camera (2), to display on the video screen (4) a simulated image $(I_1)$ adapted to the driving conditions at a determined instant, the said simulated image $(I_1)$ being centred on a virtual optical axis $(Fz_1)$ whose orientation can be adjusted with respect to that of the optical axis (20, Fz) of the camera (2), **characterized in that** the display system (3) comprises a block (35) for storing the user's preferences in which is stored, for certain driving situations, a set of information relating to the user's preferred mode of viewing for each situation and comprising the orientation, the magnification and the field of view of the simulated image $(I_1)$, the said stored information being transmitted to a block (33) for calculating the viewing conditions for the display, on the video screen (4), of a simulated image $(I_1)$ corresponding to the user's desires for the driving situation considered.

2. Rear-view device according to Claim 1, **characterized in that** it comprises a means for adjusting the magnification of the simulated image $(I_1)$ with respect to the raw image (I).

3. Rear-view device according to one of Claims 1 and 2, **characterized in that** the display system comprises a man/machine interface (32) providing instructions for forming the simulated image $(I_1)$ on the video screen (4), a block (33) for calculating the rear viewing conditions taking account of a set of input information arising from the vehicle and the man/machine interface (32), and an image processing block (31) determining at least the orientation and the field of view of the simulated image $(I_1)$ displayed on the video screen (4), on the basis of the information provided by the calculation block (33).

4. Rear-view device according to one of the preceding claims, **characterized in that** it comprises means for correcting the geometric defects of the image (I) recorded by the camera (2) for obtaining a quasi-perfect raw image (I') on the basis of which the display system (3) forms the simulated image $(I_1)$.

5. Rear-view device according to Claim 4, **characterized in that** the correction of the geometric defects of the recorded image ($I_0$) is carried out by an image processing block (31) by taking account of a set of internal parameters of the camera (2) comprising at least the focal length and the height/width ratio of the pixels, the said internal parameters being determined by calibration of the camera (2) making it possible to define a distortion model.

6. Rear-view device according to one of the preceding claims, **characterized in that** the raw image (I) being formed in a first real image plane ($P_0$) by convergence of the light rays towards a focus (F) of the camera (2), the display system (3) forms the simulated image ($I_1$) in a second image plane ($P_1$) which is deduced from the first real image plane (P) by a rotation about the focus (F).

7. Rear-view device according to Claim 6, **characterized in that** the display system (3) maps each pixel of the raw image (I) to a corresponding pixel of the simulated image ($I_1$) through a mathematical homography transformation.

8. Rear-view device according to one of Claims 6 and 7, **characterized in that**, to carry out a rotation of the plane ($P_1$) of the simulated final image ($I_1$), by an angle $\alpha$ about a horizontal axis (22) and by an angle $\beta$ about a vertical axis (21), the display system (3) determines a transformation in which each pixel of the raw image (I) is related to a pixel of the simulated final image ($I_1$) by the system of equations:

$$(1) \quad \begin{pmatrix} i_0 \\ j_0 \\ 1 \end{pmatrix} = \begin{bmatrix} \texttt{focal lenght} * \dfrac{i'}{s} + u_0 \\ \texttt{focal length} * \dfrac{j'}{s} + v_0 \end{bmatrix}$$

$$(2) \quad \begin{bmatrix} i' \\ j' \\ s \end{bmatrix} = \begin{bmatrix} \cos(\beta) & 0 & -\sin(\beta) \\ 0 & 1 & 0 \\ \sin(\beta) & 0 & \cos(\beta) \end{bmatrix} \begin{bmatrix} 1 & 0 & 0 \\ 0 & \cos(\alpha) & -\sin(\alpha) \\ 0 & \sin(\alpha) & \cos(\alpha) \end{bmatrix} \begin{bmatrix} i - u_0 \\ j - v_0 \\ 1 \end{bmatrix}$$

in which:

- i' and j' are intermediate variables given by the relation;
- ($i_1$, $j_1$) are the coordinates of a pixel of the final image ($I_1$) and ($i_0$, $j_0$) the coordinates of the corresponding pixel of the raw image (I) in an image reference frame having two orthogonal axes, respectively horizontal and vertical passing through an origin placed on an upper corner of the image;
- ($u_0$, $v_0$) are the coordinates of the centre ($O_1$) of the final image in the image reference frame;
- $\alpha$, $\beta$ are the desired angles of rotation of the plane of the final image ($I_1$) about two axes, respectively horizontal (22) and vertical (21) passing through the focus (F);
- s is a scale factor.

**Patentansprüche**

1. Rückspiegelvorrichtung für ein Fahrzeug (1), die mindestens eine Kamera (2) mit einem Sichtfeld ($X_0$), das eine bestimmte Zone der Umgebung des Fahrzeugs (1) abdeckt und auf eine optische Achse (20, Fz) zentriert ist, und ein elektronisches System (3) zur Anzeige eines von der Kamera (2) aufgezeichneten Bilds (I) der Zone der Umgebung auf einem Videobildschirm (4) aufweist, wobei die Kamera (2) ortsfest mit einer bestimmten Ausrichtung ihrer optischen Achse (20, Fz) ist und das elektronisch Anzeigesystem (3) Einrichtungen (31) zur Bildverarbeitung aufweist, die ausgehend von einem von der Kamera (2) aufgezeichneten globalen Bild ($I_0$) ein simuliertes Bild ($I_1$) auf dem Videobildschirm (4) anzeigen können, das an die Fahrbedingungen in einem bestimmten Zeitpunkt angepasst ist, wobei das simulierte Bild ($I_1$) auf eine virtuelle optische Achse ($Fz_1$ zentriert ist, deren Ausrichtung bezüglich derjenigen der optischen Achse (20, Fz) der Kamera (2) geregelt werden kann, **dadurch gekennzeichnet, dass** das Anzeigesystem (3) einen Block (35) zur Speicherung der Präferenzen des Benutzers aufweist, in dem für bestimmte Fahrsituationen eine Gruppe von Informationen bezüglich des vom Benutzer bevorzugten Sehmodus für jede Situation gespeichert ist, die die Ausrichtung, die Vergrößerung und das Sichtfeld des simulierten Bilds ($I_1$) aufweist, wobei die gespeicherten Informationen an einen Block (33) zur Berechnung der Sehbedingungen für die Anzeige eines simulierten Bilds ($I_1$) auf dem Videobildschirm (4) übertragen werden, das den Wünschen des Benutzers für die betrachtete Fahrsituation entspricht.

2. Rückspiegelvorrichtung nach Anspruch 1, **dadurch gekennzeichnet, dass** sie eine Einrichtung zur Regelung der Vergrößerung des simulierten Bilds ($I_1$) bezüglich des Rohbilds (I) aufweist.

3. Rückspiegelvorrichtung nach einem der Ansprüche 1 und 2, **dadurch gekennzeichnet, dass** das Anzeigesystem eine Mensch/Maschine-Schnittstelle (32), die Anweisungen zur Erzeugung des simulierten Bilds ($I_1$) auf dem Videobildschirm (4) enthält, einen Block (33) zur Berechnung der Sichtbedingungen nach hinten, der eine Gruppe von Eingangsinformationen berücksichtigt, die vom Fahrzeug und von der Mensch/Maschine-Schnittstelle (32) stammen, und einen Bildverarbeitungsblock (31) aufweist, der ausgehend von den vom Rechenblock (33) gelieferten Informationen mindestens die Ausrichtung und das Sichtfeld des auf dem Videobildschirm (4) angezeigten simulierten Bilds ($I_1$) bestimmt.

4. Rückspiegelvorrichtung nach einem der vorhergehenden Ansprüche, **dadurch gekennzeichnet, dass** sie Einrichtungen zur Korrektur der geometrischen Fehler des von der Kamera (2) aufgezeichneten Bilds (I) für den Erhalt eines praktisch perfekten Rohbilds (I') aufweist, von dem ausgehend das Anzeigesystem (3) das simulierte Bild ($I_1$) formt.

5. Rückspiegelvorrichtung nach Anspruch 4, **dadurch gekennzeichnet, dass** die Korrektur der geometrischen Fehler des aufgezeichneten Bilds ($I_0$) von einem Bildverarbeitungsblock (31) unter Berücksichtigung einer Gruppe von internen Parametern der Kamera (2) durchgeführt wird, die mindestens die Brennweite und das Höhe/Breite-Verhältnis der Pixel aufweisen, wobei die internen Parameter durch eine Kalibrierung der Kamera (2) bestimmt werden, die es ermöglicht, ein Verzerrungsmodell zu definieren.

6. Rückspiegelvorrichtung nach einem der vorhergehenden Ansprüche, **dadurch gekennzeichnet, dass**, wenn das Rohbild (I) sich in einer ersten realen Bildebene ($P_0$) durch Konvergenz der Lichtstrahlen zu einem Brennpunkt (F) der Kamera (2) formt, das Anzeigesystem (3) das simulierte Bild ($I_1$) in einer zweiten Bildebene ($P_1$) formt, die sich von der ersten realen Bildebene (P) durch eine Drehung um den Brennpunkt (F) ableitet.

7. Rückspiegelvorrichtung nach Anspruch 6, **dadurch gekennzeichnet, dass** das Anzeigesystem (3) jedem Pixel des Rohbilds (I) ein Pixel des simulierten Bilds ($I_1$) durch eine mathematische Homographie-Transformation entsprechen lässt.

8. Rückspiegelvorrichtung nach einem der Ansprüche 6 und 7, **dadurch gekennzeichnet, dass,** zur Durchführung einer Drehung der Ebene ($P_1$) des simulierten Endbilds ($I_1$) um einen Winkel $\alpha$ um eine waagrechte Achse (22) und um einen Winkel $\beta$ um eine senkrechte Achse (21), das Anzeigesystem eine Transformation bestimmt, bei der jedes Pixel des Rohbilds (I) mit einem Pixel des simulierten Endbilds ($I_1$) durch das System von Gleichungen verbunden wird:

$$(1) \quad \begin{pmatrix} i_0 \\ j_0 \\ 1 \end{pmatrix} = \begin{bmatrix} \text{Brennweite} * \dfrac{i'}{s} + u_0 \\[2mm] \text{Brennweite} * \dfrac{j'}{s} + v_0 \end{bmatrix}$$

$$(2) \quad \begin{bmatrix} i' \\ j' \\ s \end{bmatrix} = \begin{bmatrix} \cos(\beta) & 0 & -\sin(\beta) \\ 0 & 1 & 0 \\ \sin(\beta) & 0 & \cos(\beta) \end{bmatrix} \begin{bmatrix} 1 & 0 & 0 \\ 0 & \cos(\alpha) & -\sin(\alpha) \\ 0 & \sin(\alpha) & \cos(\alpha) \end{bmatrix} \begin{bmatrix} i - u_0 \\ j - v_0 \\ 1 \end{bmatrix}$$

in dem:

- i' und j' durch die Beziehung gegebene Zwischenvariable sind;
- $(i_1, j_1)$ die Koordinaten eines Pixels des Endbilds ($I_1$) und $(i_0, j_0)$ die Koordinaten des entsprechenden Pixels des Rohbilds (I) in einem Bildkoordinatensystem sind, das zwei orthogonale Achsen, eine waagrechte bzw. eine senkrechte, hat, die durch einen Anfangspunkt gehen, der in einer oberen Ecke des Bilds angeordnet ist;
- $(u_0, v_0)$ die Koordinaten des Mittelpunkts ($O_1$) des Endbilds im Bildkoordinatensystem sind;
- $\alpha$, $\beta$ die gewünschten Drehwinkel der Ebene des Endbilds ($I_1$) um zwei Achsen, eine waagrechte (22) und eine senkrechte (21), sind, die durch den Brennpunkt (F) gehen;
- s ein Skalierungsfaktor ist.

Fig. 1

Fig. 2

Fig. 3

4a                    4b

Fig. 4

*Fig. 5*

6a                6b                6c

*Fig. 6*

*Fig. 7*                *Fig. 8*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5978017 A
- US 20020071676 A
- FR 2673499 A
- EP 1211132 A